# EUROPEAN PATENT APPLICATION

(11) **EP 2 586 747 A2**
(43) Date of publication of application: **01.05.2013**
(21) Application number: 12189867.0
(22) Date of filing: 25.10.2012
(51) Int. Cl.: C02F 1/42

(54) **Multi-valve group for water softeners**

(30) Priority: 28.10.2011 IT FI20110064 U
(71) Applicant: Wata S.r.l., 50018 Scandicci (FI) (IT)
(72) Inventor: Ferrali, Luigi, 50012 Bagno a Ripoli (FI) (IT)
(74) Representative: Mannucci, Michele

(57) **Abstract**

Multi-valve group (10) for softeners (100) of the type with ion-exchange resin tank (11) and brine container (12), comprising a plurality of segments for water/brine flow defined inside a monobloc body (13).

## Description

### Technical Field

The present invention relates to the water treatment devices; in particular, the object of the present invention is a multi-valve group to be fixed on the tank of a water softening system.

### State of the Art

As it is well known, a water softener is provided with a tank for the resins bonding calcium and magnesium contained in the water.

In conventional water softening appliances, water from the water network is diverted into the resin tank before achieving the end-users. In normal operation, water enters from an upper entrance, goes down to the tank bottom crossing the resins, enters in a central channel and goes upwards to the outside of the container.

At this point, water rising from the central channel is devoid of limescale and is therefore sent to the end-users.

This process is repeated until the resins are "satured"; then the water softener ECU (electronic control unit) starts the automatic resin regeneration, performed using the salt solution contained inside a container associated with the tank (either separated from or in a single piece with it). The water softener fulfils its functions completely autonomously and does not require maintenance but the periodic addition of salt to the container.

To allow the resins regeneration step, a series of ducts, offtakes and valves associated with the softener are required to allow the operating steps, that can be summarized as follows: 1) service step, when the softener purifies water for the end-users/services, 2) brine suction step, 3) resins slow washing, 4) resins fast washing, 5) filing the brine container.

According to the prior art, the softener hydraulic system (ducts, connections, valves, etc.) is fixed on the outside of the tank. The hydraulic system installation step is however particularly long and crucial, and significantly affects the water softener installation costs.

### Object and summary of the invention

The object of the present invention is to solve the softener installation problems, in particular by providing a multi-valve group to be fixed on the resin tank head in place of all or of the most hydraulic components with which the softener is equipped, thus facilitating the softener installation.

This and other objects, that will be better described below, are achieved through a multi-valve group to be fixed on the tank of a water softening system according to claim 1 below.

### Brief description of the drawings

Further characteristics and advantages of the invention will be more apparent from the description of a preferred, although not exclusive, embodiment, illustrated by way of non limiting example in the attached tables of drawings, wherein:

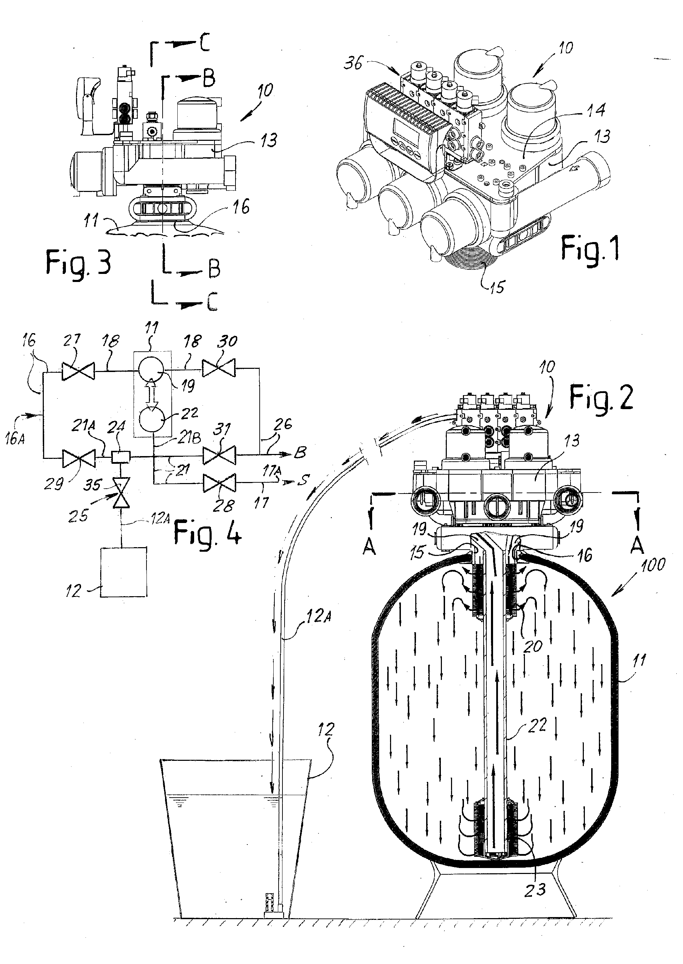

figure 1 is an axonometric view of a multi-valve group for softeners according to the present invention;
figure 2 is a vertical sectional view, according to the vertical plane B-B of figure 3, of a softener provided with a multi-valve group according to the present invention;
figure 3 is a side view of a portion of the softener of figure 2;
figure 4 is a front view of a diagram of the softener of the previous figures;

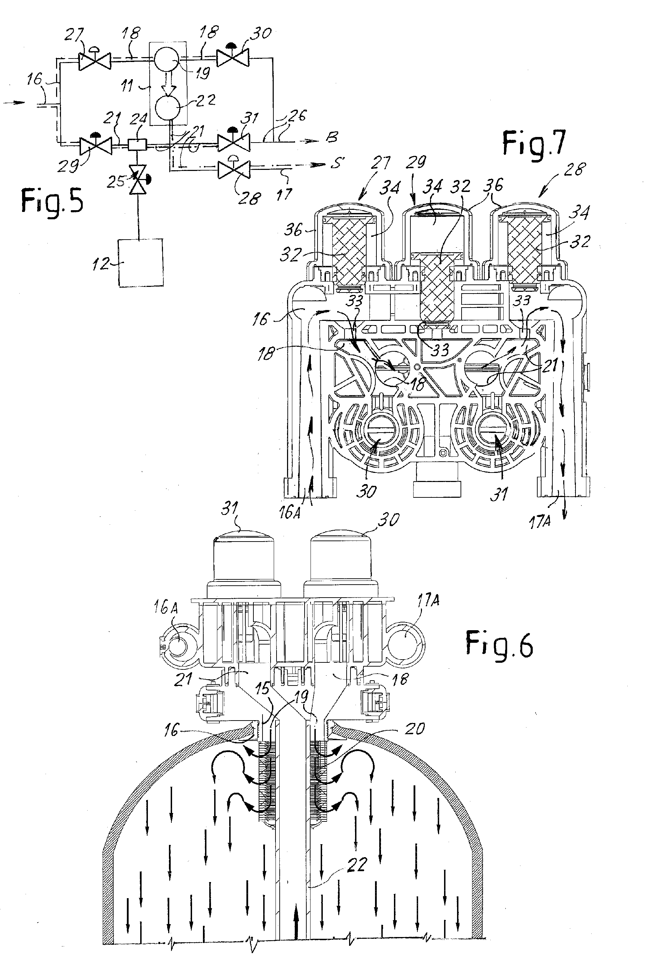

figures 5, 6, and 7 show respectively: - a scheme of the softener system of the previous figures, - a front sectional view, according to the plane B-B, of a portion of the softener of the previous figures, wherein the multi-valve group according to the invention is highlighted, and - a plan sectional view, according to the plane A-A of figure 2, of the multi-valve group, all these three views relating to the softener service step;

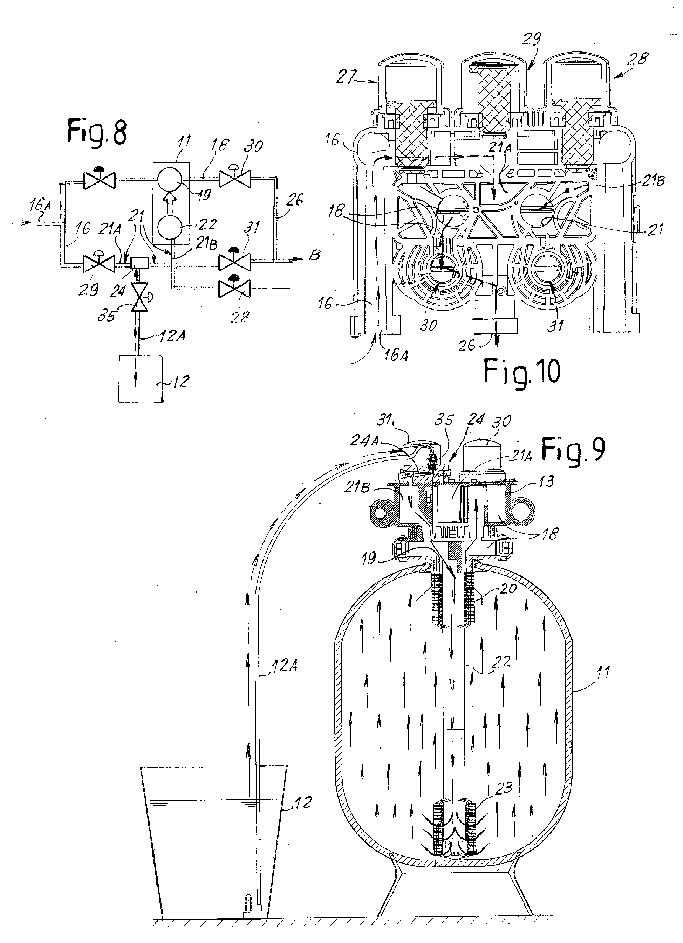

figures 8, 9, and 10 show respectively: - a scheme of the softener system of the previous figures, - a front sectional view, according to the plane C-C of figure 2, of a portion of the softener of the previous figures, wherein the multi-valve group according to the invention is highlighted, and - a plan sectional view, according to the plane A-A, of the multi-valve group, all these three views relating to the brine suction step;

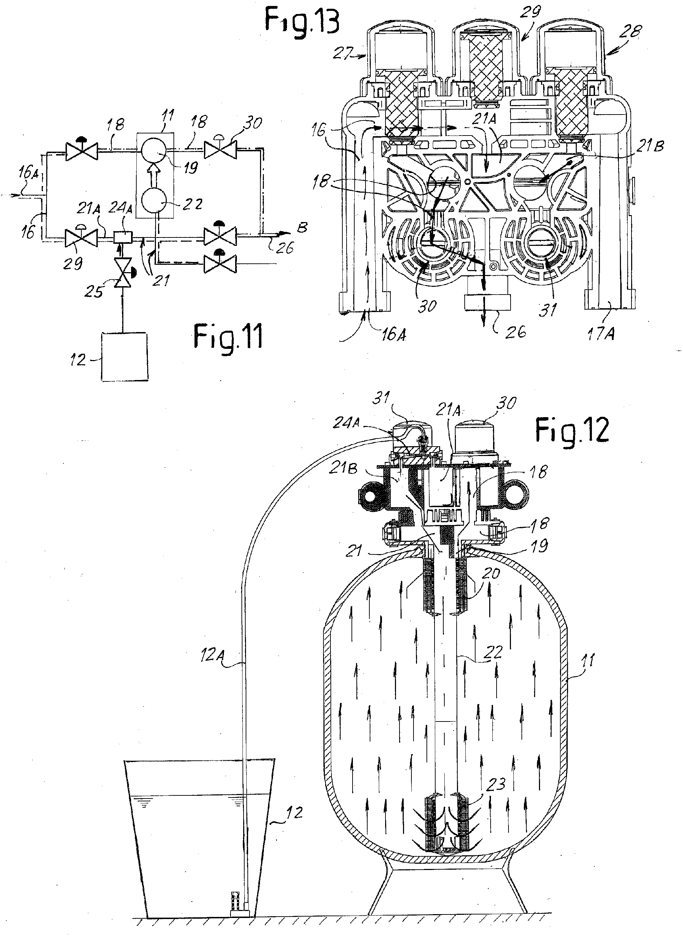

figures 11, 12, and 13 show respectively: - a scheme of the softener system of the previous figures, - a front sectional view, according to the plane C-C, of a portion of the softener of the previous figures, wherein the multi-valve group according to the invention is highlighted, and - a plan sectional view, according to the plane A-A, of the multi-valve group, all these three views relating to the softener slow washing step;

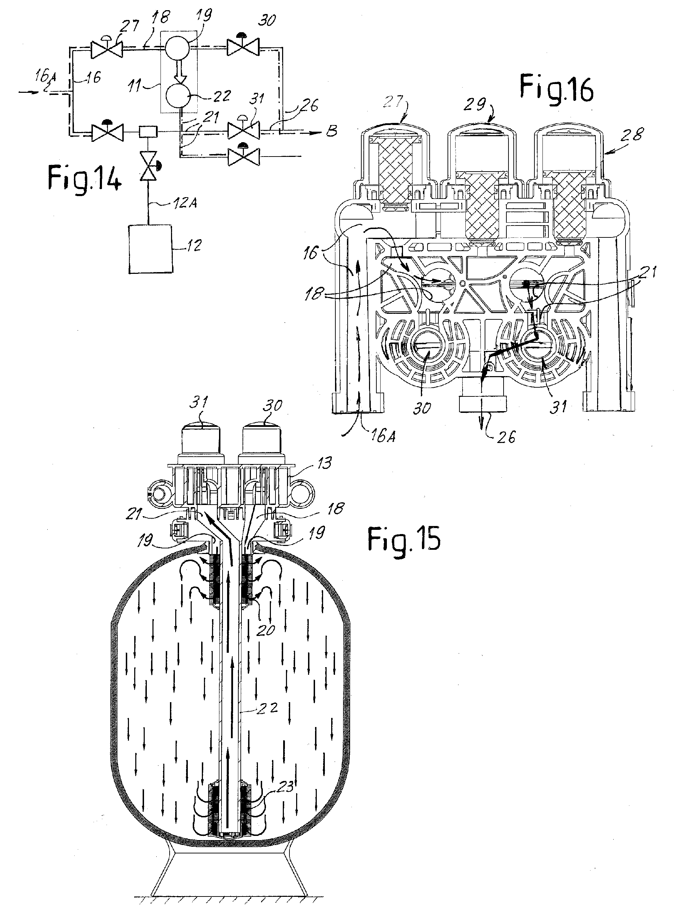

figures 14, 15, and 16 show respectively: - a scheme of the softener system of the previous figures, - a front sectional view, according to the plane B-B, of a portion of the softener of the previous figures, wherein the multi-valve group according to the invention is highlighted, and - a plan sectional view, according to the plane A-A, of the multi-valve group, all these three views relating to the softener fast washing step;

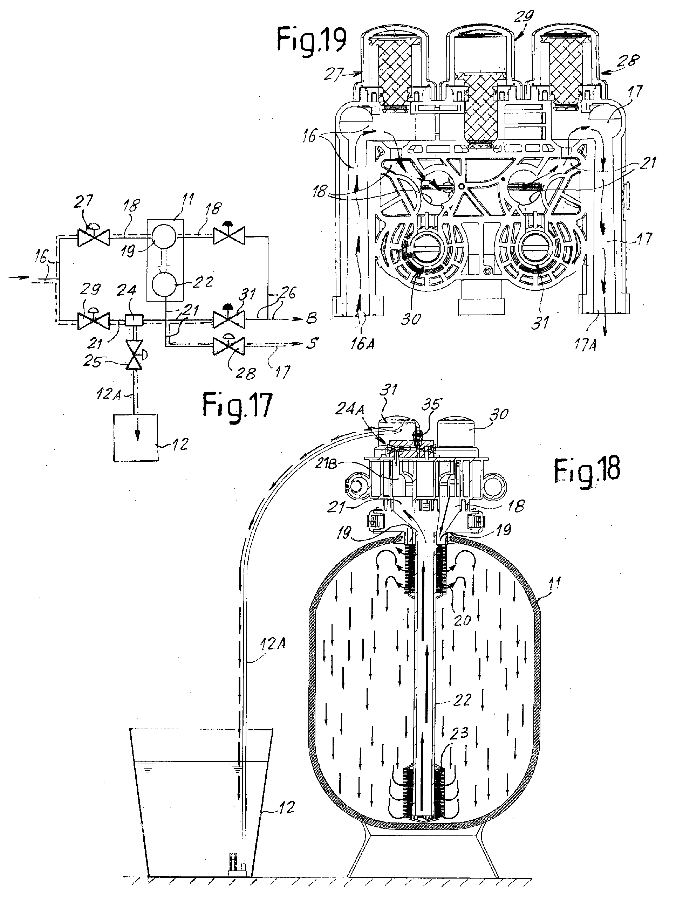

figures 17, 18, and 19 show respectively: - a scheme of the softener system of the previous figures, a front sectional view, according to a combination of the planes B-B and C-C, of a portion of the softener of the previous figures, wherein the multi-valve group according to the invention is highlighted, and - a plan sectional view, according to the plane A-A, of the multi-valve group, all these three views relating to the brine container filling step;

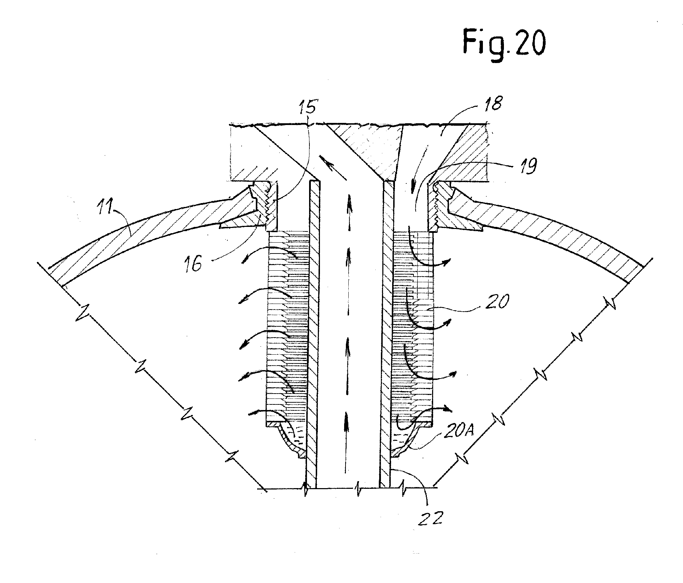

figure 20 shows a detail of the group of the previous figures relating to the water supply entry area.

### Detailed description of an embodiment of the invention

With reference to the previously mentioned figures, a multi-valve group according to the invention is indicated as a whole with number 10, and the water softener comprised of this group is indicated as a whole with number 100. The softener tank is indicated with 11 and the container for the brine is indicated with 12. The tank contains ion-exchange resin through which the water passes to eliminate limescale.

The multi-valve group 10 is mainly comprised of a monobloc body 13, i.e. a body produced in a single piece, preferably made of plastic (but it may be also made of metal), on which a series of duct segments are defined for the passage of water, brine etc. A part of the monobloc body is structurally open towards the outside but is functionally closed by a lid 14 (see figure 1).

The monobloc body 13 has a mouth 15 for the connection to the tank 11; this mouth is in the form of a threaded circular end, like a nipple, and is screwed on a respective aperture 16 defined on the top of the tank.

As already said, inside the monobloc body 13 duct segments are defined, inside which the water of the softening device flows; these segments are interrupted by means of valves, whose opening/closing defines the water flow directions in the different parts of the softener, as better explained below.

According to the invention, the valves are open/close valves, and each of them has a cut-off (i.e. an obturator) designed to close the respective opening for the water/brine flow; each cut-off is separate from, and independent of the cut-offs of the other valves, and each opening is defined in the monobloc body.

In particular, in the monobloc body 13 the following are respectively defined: - a first segment 16 for raw water entry, - a second segment 17 for supplying the treated water to the services S, and - a third segment 18, which is comprised of a first operative connection to the tank 11 (to be filled with ion-exchange resin), that is a first passage 19 leading to the upper part of the tank 11, and ends with a first filter 20 for the water (or brine) flowing from this first passage 19 to the tank and vice versa.

A fourth segment 21 is also defined in the monobloc body 13, comprised of a second operative connection to the tank, which comprises a vertical tube 22, arranged along the axis of the tank (the vertical arrangement refers to the drawing and to the usual arrangement of this kind of tank), and ends with a second filter 23, open towards the inside of the tank, allowing the water/brine flowing from the tank to the tube 22 and vice versa to be filtered. The second filter 23 is at a lower height than the first filter 20, close to the tank bottom. The connection area between the group 10 and the tank 11, i.e. the area in which the first passage 19 is defined, is such that the fourth segment 21 is partially contained inside the third segment 18 (practically the tube 22 is arranged inside the first passage 19, this latter being defined as an interspace between the tube 22 and the walls of the nipple 15 for connecting the monobloc body to the tank).

Practically, the tube 22 is preferably coaxial with the first passage 19 (i.e. with the nipple 15) and with the first filter 20. Between the tube and the filter 20 an annular interspace (practically a ring) is arranged, inside which the water/brine flows. Water from the third segment 18 enters the ring substantially for a limited angular extent and not along all the round angle. Therefore, to avoid water exiting only on one side of the filter 20, thus passing through only a part of the tank, hence making preferred paths for the resin and therefore without exploiting it completely, a closed bottom 20A is adequately arranged (see in particular figure 20) at the base of the ring/annular interspace defined between the tube 22 and the filter 20.

This closed bottom, practically an "annular cup", forces the water to move also on the opposite side of the interspace with respect to the side on which it flows directly from the third segment 18, therefore forcing it to exit from the filter 20 also in this area; as a result, water exits from the filter substantially at 360°, and the resin is therefore invested in a substantially homogeneous manner.

Means 24 are provided for the connection of the fourth segment 21 to the brine container 12; these means are associated with respective opening/closing valve means 25, which will be better described below, to allow the water/brine passage towards and from the container 12.

A fifth segment 26 is also defined in the monobloc body 13, for discharging the resin washing water in the white water B.

The multi-valve group 10 furthermore comprises five valves of the open/close type, and more precisely: - a first valve 27, interposed between the first segment 16 and the third segment 18, - a second valve 28, interposed between the second segment 17 and the fourth segment 21, - a third valve 29, arranged between the first segment 16 and the fourth segment 21, - a fourth valve 30, arranged between the third segment 18 and the fifth segment 26, - a fifth valve 31, interposed between the fourth segment 21 and the fifth segment 26.

According to the invention (see figures 7, 13, 16, and 19), each of said valves 27, 28, 29, 30, and 31 has a respective cut-off 32 (the valves are substantially equal and therefore the description thereof will be made with common reference numbers, indicated mostly in figure 7) that can slide along a given direction to close or open a respective opening 33, which is also defined as a part of the monobloc body 13 (i.e. it is defined by portions of said monobloc body). In particular, in this embodiment each cut-off 32 is comprised of a piston that can be translated transversally inside a respective segment to close, with an own end, a respective opening 33 obtained on the opposite part of the respective segment with respect to the entrance of the piston in this segment. Obviously, the opening 33 and the piston 32 are adequately shaped and provided with hydraulic seals to ensure optimal tightness.

In this example, the piston 32 is preferably a double-acting hydraulic piston, and a part thereof is therefore housed inside a movement chamber 34 defined by a bell 36 projecting towards the outside of the monobloc body 13 or of the lid 14.

In other embodiments these cut-offs may be of different type, and the valves, instead of being hydraulic valves (preferably oleo-dynamic), may be for instance electro-valves, wherein the cut-offs are moved through magnetic induction. These cut-offs may be furthermore moved also by means of other mechanical devices.

It should be noted that, according to the invention, each cut-off is separate from, and independent of, the cut-offs of the other valves (each cut-off closes only one opening), differently from what occurs in prior art softeners using slide valves, i.e. valves with one cut-off that moves and opens and closes different openings for the water/brine passage. In this embodiment the first, the second, the third, the fourth, and the fifth valve are adequately single-acting valves, independent of one another. In this example the valve supply hydraulic system is not shown, as it is clearly apparent to those skilled in the art.

In the preferred embodiments, in the multi-valve group the opening/closing movement directions of the cut-offs 32 of the first, the third and of the second valve 27, 29, and 28 advantageously are incident (i.e. intersect) to a first side of the monobloc body 13, whilst the opening/closing movement directions of the cut-offs 32 of the fourth and of the fifth valve 30, 31 are incident to a second side of this monobloc body. This allows to optimize both the inner spaces of the monobloc body 13, to obtain the segments where water/brine flows, and the outer spaces of this monobloc body, with advantages for the production of this latter, the multi-valve group compactness and the easiness of installation.

According to a particularly preferred embodiment, the opening/closing movement directions of the cut-offs of the first, of the second and the of third valve are parallel to, and coplanar with, one another.

The channel 16A for entering the monobloc body is obtained on one side of this body, and has an extension direction substantially parallel to the slide direction of the cut-offs of the first, second and third valves. Analogously, the exit channel 17A to the services is obtained on the opposite side of the monobloc body 13 with respect to that of the entry channel 16A; it also has an extension direction substantially parallel to the slide direction of the cut-offs of the above mentioned valves (entry and exit channels 16A, 17A extend in the same direction).

It should be noted that, for an advantageous distribution of the spaces inside the monobloc body 13, the first, the second and the third valve 27, 28, 29 are aligned on the respective side of the monobloc body 13 in the following order: first valve - third valve - second valve, starting from the side of the monobloc body on which the entry channel 16A is defined, towards respectively the exit channel 17A.

The opening/closing movement directions of the cut-offs of the fourth and of the fifth valve are adequately parallel to, and coplanar with, each other and, more in particular, they are aligned on the same side, wherein the fifth valve 31 is closer the entry channel 16A and the fourth valve 30 is closer to the exit channel 17A. It should be noted that in this example the opening/closing movement directions of the cut-offs 32 of the fourth and of the fifth valve 30, 31 adequately lie on a substantially transverse plane, which is preferably orthogonal to the lying plane of the directions of the cut-offs 32 of the other valves 27, 28, and 29.

In this example the bells 36, related to the movement chamber 34 of said fourth and fifth valve 30, 31, are fixed on the lid 14.

The means 24 for connecting the fourth segment 21 to the brine container 12 are arranged in a first sub-segment 21A, which is comprised between the third valve 29 and the intersection with a second sub-segment 21 B leading to the second operative connection to the tank, i.e. to the tube 22.

More in particular, the first sub-segment 21A comprises a constricted section like a Venturi tube 24A (see figures 9, 12, and 18) designed to reduce the pressure in a conduit 12A connecting to said brine container 12, so that the content thereof can be sucked. A sixth valve 35 is arranged between the Venturi tube 24A and the conduit 12A; this sixth valve 35 is of a different type than the five valves described above, and it is outside the monobloc body 13.

A softener electronic control unit 36 is fixed on the lid 14.

The multi-valve group operates as follows. The described steps are the typical steps of a softener, i.e. 1) service step, when the softener purifies water for the end-users, 2) brine suction step, 3) resins slow washing, 4) resins fast washing, 5) filing the brine container.

The attached tables 2 to 6 respectively illustrate the steps 1-2-3-4-5 mentioned above. Each table also shows the softener diagram, wherein a broken line indicates water before passing inside the tank 11, and a dash/dot line indicates water after having moved through the tank. The arrows in the various figures indicate the water/brine flow direction in the various segments of the multi-valve group and in the tank.

Service step. The first and the second valve 27 and 28 are open, all the other valves 29, 30, 31, and 35 are closed. Water enters from the entry channel 16A of the first segment 16; it flows through the first valve 27, then flows along the third segment 18, enters the passage 19, crosses the first filter 20 and enters the upper part of the tank 11. In this way water falls down towards the bottom of the tank 12, going across the ion-exchange resin contained in it, where calcium is released. Then water from the second filter 23 enters the tube 22, and enters the monobloc body 13 in the fourth segment 21; then water passes across the second valve 28 and, exiting from the exit channel 17A of the second segment 17, flows to the services S.

Suction step. The third, the fourth and the sixth valve 29, 30, 35 are open, and all the other valves 27, 28, and 31 are closed. Water enters from the entry channel 16A of the first segment 16; it flows through the third valve 29 and enters in the sub-segment 21A of the fourth segment 21, passing through the Venturi tube 24A and thus "sucking" brine from the container 12. The water-brine solution flows along the fourth segment 21, next enters the tube 22 and then, from the second filter 23, the resin tank 11. From here the solution returns in the monobloc body 13 through the first filter 20 and the passage 19 of the third segment 18; then it crosses the fourth valve 30 and flows towards the white water discharge, passing along the fifth segment 26.

Slow washing step. The third and the fourth valve 29, 30 are open, and all the other valves 27, 28, 31, and 35 are closed. In the previous step the tank has been filled with brine. Now the resin wash step starts. Water enters from the entry channel 16A of the first segment 16; it passes across the third valve 29 and enters the sub-segment 21A of the fourth segment 21, passing through the Venturi tube 24A without sucking brine, as the sixth valve 35 is closed. Water flows along the fourth segment 21, then enters the tube 22 and, from the second filter 23, passes into the tank 11, where it washes the resin. From here, water returns in the monobloc body 13 through the first filter 20 and the passage 19 of the third segment 18; then it crosses the fourth valve 30 and flows towards the white water discharge, passing along the fifth segment 26.

Fast washing step. Differently from the slow washing step, in the fast washing step the first and the fifth valve 27, 31 are open, and all the other valves 28, 29, 30, and 35 are closed. Practically the wash water, instead of flowing across the third valve inside the fourth segment 21 in the tank, flows in reverse order: it passes across the first valve 27, flows along the third segment 18 and enters the tank through the passage 19 and the first filter; next, it exits from the tank through the tube 22 and flows in the fourth segment 21, then exits towards the white water discharge through the fifth valve 31 and the fifth segment 26.

Filling step. In this embodiment, the filing step is equal to the service step, but here also the valve 35 is open, so that the raw water can flow into the container 12. Alternatively, the third and the sixth valve 29 and 35 may be open, and all the other valves 27, 28, 30, and 31 closed: water flows along the first segment 16, passes across the third valve 35, enters, through the connection with the Venturi tube 24A, the duct 12A for the connection to the brine container 12 (inside which salt in solid form has been just inserted), passes across the sixth valve 35 and achieves the container, thus creating brine.

The multi-valve group of the invention is particularly easy to be installed on the tank; in fact, it is sufficient to put the nipple 15 on the tank mouth 15 and screw the group, without the need for fixing tubes, ducts, connections and valves to the tank, with clear advantages in terms of installation time and risk of incorrect installation. Furthermore, thanks to the particular structure and arrangement of the valves the softener is more compact. Moreover, thanks to the fact that the valves are provided with substantially independent cut-offs, the flow control can be particularly accurate and it may be re-programmed, if necessary, according to specific needs.

Last but not least, also the efficiency in resin-water exchange is improved.

It is understood that what illustrated purely represents possible nonlimiting embodiments of the present invention, which may vary in forms and arrangements without departing from the scope of the concept on which the invention is based. Any reference numbers in the appended claims are provided for the sole purpose of facilitating the reading thereof in the light of the description hereinbefore and the accompanying drawings and do not in any way limit the scope of protection of the present invention.

## Claims

1. Multi-valve group (10) for water softeners (100) of the type with ion-exchange resin tank (11) and brine container (12), comprising a plurality of segments for the water/brine flow defined inside a monobloc body (13), respectively: - a first segment (16) for raw water entrance, - a second segment (17) for treated water supply to the services, - a third segment (18), comprising a first operative connection (19) to the tank (11), - a fourth segment (21), comprising a second operative connection (22) to the tank (11), - a fifth segment (26) for discharging the resin wash water; connecting means (24) being provided for connecting said fourth segment (21) to the brine container (12), said connecting means being associated with respective opening/closing valve means (25), said multi-valve group (10) comprising an area for the connection to the tank, where said fourth segment (21) is partially contained inside said third segment (18), said multi-valve group (10) further comprising at least five valves of the open/close type, each of which having a cut-off (32) to close a respective opening (33) for the water/brine flow, each cut-off (32) being separate from, and independent of, the cut-offs (32) of the other valves, each opening (33) being defined in said monobloc body (13); a first valve (27) interposed between said first segment (16) and said third segment (18), a second valve (28) interposed between said second segment (17) and said fourth segment (21), a third valve (29) arranged between said first segment (16) and said fourth segment (21), a fourth valve (30) arranged between said third segment (18) and said fifth segment (26), and a fifth valve (31) interposed between said fourth segment (21) and said fifth segment (26) being respectively provided.

2. Multi-valve group according to claim 1, wherein the opening/closing movement directions of the cut-offs (32) of the first, of the second, and of the third valve (27, 28, 29) are incident to a first side of said monobloc body (13), whilst the opening/closing movement directions of the cut-offs (32) of the fourth and of the fifth valve (30, 31) are incident to a second side of said monobloc body (13).

3. Multi-valve group according to claim 1 or 2, wherein the opening/closing movement directions of the cut-offs (32) of the first, of the second, and of the third valve (27, 28, 29) are parallel to, and coplanar with, one another.

4. Multi-valve group according to claim 1, 2, or 3, wherein the opening/closing movement directions of the cut-offs (32) of the fourth and of the fifth valve (30, 31) are parallel to, and coplanar with, each another.

5. Multi-valve group according to claim 3 and 4, wherein the opening/closing movement directions of the cut-offs (32) of the fourth and of the fifth valve (30, 31) lie on a substantially transverse plane, which is preferably orthogonal to the lying plane of the movement directions of the cut-offs (32) of the other valves (27, 28, 29).

6. Multi-valve group according to one or more of the previous claims, wherein said cut-offs (32) are double-acting hydraulic pistons, one end of which can be transversally translated inside a respective segment so as to close a respective opening (33) obtained on the opposite part of said segment with respect to the entrance of the piston in the same segment.

7. Multi-valve group according to claim 6, wherein each said valve has a chamber (34) for moving a double-acting piston, defined by a bell (36) projecting towards the outside of said monobloc body (13).

8. Multi-valve group according to one or more of the previous claims, wherein one side of said monobloc body (13) is closed by a lid (14) for accessing one or more said segments defined on said monobloc body (13).

9. Multi-valve group according to claims 7 and 8, wherein the bells (36) related to the piston movement chambers (34) of said fourth and fifth valve are fixed on said lid (14).

10. Multi-valve group according to one or more of the previous claims, wherein said means (24) for connecting said fourth segment (21) to the brine container (12) are arranged in a first sub-segment (21A) comprised between said third valve (29) and the intersection with a sub-segment (21 B) leading to said second operative connection to the tank.

11. Multi-valve group according to claim 10, wherein said first sub-segment (21A) comprises a constricted section like a Venturi tube (24A) reducing the pressure in a conduit (12A) connecting to said brine container (12) so that the content thereof can be sucked, a sixth valve (35) being provided between said Venturi tube (24A) and said duct (12A).

12. Multi-valve group according to one or more of the previous claims, wherein said first, second, third, fourth and fifth valve (27, 28, 29, 30, 31) are single-acting valves, independently of one another.

13. Multi-valve group according to one or more of the previous claims, comprising a tube (22) for connecting the bottom area of said tank (11) to the fourth segment (21) arranged, preferably coaxially, inside the area connecting said third segment (18) to the tank (11), a first filter (20) being provided between said area connecting the third segment and the tank; said first filter (20) surrounding said tube (22), thus forming an annular interspace between tube (22) and filter (20), inside which water flows, a bottom (20A) being provided for closing said interspace, designed to make water exit homogeneously from the filter substantially along the whole circular extension of the same filter (20).
